# EUROPEAN PATENT APPLICATION

(11) **EP 3 611 773 A1**
(43) Date of publication of application: **19.02.2020**
(21) Application number: 19783964.0
(22) Date of filing: 16.05.2019

(54) **GAS SUPPLY CONTROL METHOD, DEVICE AND SYSTEM OF FUEL CELL, AND RAILWAY VEHICLE**

(30) Priority: 17.05.2018 CN 201810474879
(71) Applicant: CRRC Qingdao Sifang Co., Ltd., Qingdao, Shandong 266111 (CN)
(72) Inventor: TIAN, Qing, Qingdao, Shandong 266111 (CN); LI, Yankun, Qingdao, Shandong 266111 (CN); MOU, Xiaosha, Qingdao, Shandong 266111 (CN); LIU, Yuwen, Qingdao, Shandong 266111 (CN); HAN, Qingjun, Qingdao, Shandong 266111 (CN)
(74) Representative: Carangelo, Pierluigi
(86) International application number: PCT/CN2019/087215
(87) International publication number: WO 2019/219058

(57) **Abstract**

A method, device and system for controlling air supply of fuel cell, and a railway vehicle are disclosed. The method includes: continuously inputting reaction air to a fuel cell based on a preset excess coefficient, wherein the preset excess coefficient is greater than a standard excess coefficient; in a case that a working power of a target object is increased, detecting whether a current excess coefficient is less than or equal to the standard excess coefficient in real time or regularly; and if it is detected that the excess coefficient is less than or equal to the standard excess coefficient, increasing the current excess coefficient to the preset excess coefficient. The disclosure solves the technical problem that the existing fuel cell is relatively slow in response when the electricity consumption demand is increased.

## Description

### Technical Field

The embodiments of the present disclosure relate to the field of fuel cell control, and more particularly to a method, device and system for controlling air supply of fuel cell, and a railway vehicle.

### Background

A fuel cell is a power generation device that directly converts chemical energy into electrical energy. By feeding fuel and air separately into the fuel cell, the electrical energy can be generated. Since the fuel cell does not involve combustion during the reaction, the energy conversion efficiency is not limited by the Carnot cycle, and high power generation efficiency can be achieved. Therefore, as a new energy source with no pollution and high heat conversion rate, the fuel cell is widely used in a power supply system of trams and subways to supply power to facilities such as air conditioners, lights, and televisions in a carriage.

In the power supply process of the fuel cell, when a working power of an electrical appliance is increased, it is necessary to increase a power supply current of the fuel cell. In order to increase the power supply current of the fuel cell, the conventional art adopts a scheme of calculating reaction flow rates of hydrogen and air needing to be delivered to the fuel cell, and then adjusting flow rates of the hydrogen and the air input to the fuel cell according to the current flow rates of the hydrogen and the air detected in real time, thereby increasing the power supply power of the fuel cell. Since the above scheme calculates the flow rates of the hydrogen and the air needing to be increased according to the current working power of the electrical appliance to adjust the flow rates of the hydrogen and the air input to the fuel cell after the working power of the electrical appliance is increased. During the process, the current changes in a microsecond level, and an airflow adjusting speed is in a second level, so that there is a certain delay in the response of the fuel cell, which results in a slow response of the fuel cell.

In view of the above problem that the existing fuel cell is relatively slow in response when the electricity consumption demand is increased, an effective solution has not been proposed yet.

### Summary

The embodiments of the disclosure provide a method, device and system for controlling air supply of fuel cell, and a railway vehicle, which are intended to at least solve the technical problem that the existing fuel cell is relatively slow in response when the electricity consumption demand is increased.

According to an embodiment of the disclosure, a method for controlling air supply of fuel cell is provided, which may include: reaction air is continuously input to a fuel cell based on a preset excess coefficient, wherein the preset excess coefficient is greater than a standard excess coefficient; when a working power of a target object is increased, it is detected whether a current excess coefficient is less than or equal to the standard excess coefficient in real time or regularly; and if it is detected that the excess coefficient is less than or equal to the standard excess coefficient, the current excess coefficient is increased to the preset excess coefficient.

According to another embodiment of the disclosure, a device for controlling air supply of fuel cell is provided, which may include: an input component, configured to continuously input reaction air to a fuel cell based on a preset excess coefficient, wherein the preset excess coefficient is greater than a standard excess coefficient; a first detection component, configured to detect, when a working power of a target object is increased, whether a current excess coefficient is less than or equal to the standard excess coefficient in real time or regularly; and a control component, configured to increase, if it is detected that the excess coefficient is less than or equal to the standard excess coefficient, the current excess coefficient to the preset excess coefficient.

According to another embodiment of the disclosure, a system for controlling air supply of fuel cell is provided, which may include: a fuel cell, configured to supply, after a railway vehicle is powered on, power to an auxiliary system of the railway vehicle; a gas input device, connected to the fuel cell, and configured to continuously input reaction air to a fuel cell based on a preset excess coefficient, wherein the preset excess coefficient is greater than a standard excess coefficient; and a controller, connected to the gas input device, and configured to increase, if it is detected that the excess coefficient is less than or equal to the standard excess coefficient when a working power of a target object is increased, a current excess coefficient to the preset excess coefficient.

According to another aspect of the embodiments of the disclosure, a railway vehicle is also provided, which may include the above system for controlling air supply of fuel cell.

In the embodiments of the disclosure, by means of the manner that the flow rate of air input to a fuel cell is greater than an actual demand value, reaction air is continuously input to the fuel cell based on a preset excess coefficient, wherein the preset excess coefficient is greater than a standard excess coefficient; when a working power of a target object is increased, it is detected whether a current excess coefficient is less than or equal to the standard excess coefficient in real time or regularly; and if it is detected that the excess coefficient is less than or equal to the standard excess coefficient, the current excess coefficient is increased to the preset excess coefficient. The purpose of providing needed power at a high reaction speed by the fuel cell when the electricity consumption demand is increased is achieved, so that the technical effect of increasing the response speed of the fuel cell is realized, thus solving the technical problem that the existing fuel cell is relatively slow in response when the electricity consumption demand is increased.

### Brief Description of the Drawings

The accompanying drawings described herein are used to provide a further understanding of the disclosure, and constitute a part of the present application, and the exemplary embodiments of the disclosure and the description thereof are used to explain the disclosure, but do not constitute improper limitations to the disclosure. In the drawings:
Fig. 1 is a flowchart of a method for controlling air supply of fuel cell according to an embodiment of the disclosure;
Fig. 2 is a flowchart of an optional method for controlling air supply of fuel cell according to an embodiment of the disclosure;
Fig. 3 is a flowchart of an optional method for controlling air supply of fuel cell according to an embodiment of the disclosure;
Fig. 4 is a flowchart of an optional method for controlling air supply of fuel cell according to an embodiment of the disclosure;
Fig. 5 is a flowchart of an optional method for controlling air supply of fuel cell according to an embodiment of the disclosure;
Fig. 6 is a flowchart of a preferred method for controlling air supply of fuel cell according to an embodiment of the disclosure;
Fig. 7 is a flowchart of a preferred method for controlling air supply of fuel cell according to an embodiment of the disclosure;
Fig. 8 is a schematic diagram of a device for controlling air supply of fuel cell according to an embodiment of the disclosure; and
Fig. 9 is a schematic diagram of a system for controlling air supply of fuel cell according to an embodiment of the disclosure.

### Detailed Description of the Embodiments

In order to make those skilled in the art better understand the solutions of the disclosure, the technical solutions in the embodiments of the disclosure will be clearly and completely described below with reference to the drawings in the embodiments of the disclosure. It is apparent that the described embodiments are only a part of the embodiments of the disclosure, not all of the embodiments. On the basis of the embodiments of the disclosure, all other embodiments obtained on the premise of no creative work of those of ordinary skill in the art should fall within the scope of protection of the disclosure.

It is to be noted that the specification and claims of the disclosure and the terms "first", "second" and the like in the drawings are used to distinguish similar objects, and do not need to describe a specific sequence or a precedence order. It will be appreciated that data used in such a way may be exchanged under appropriate conditions, in order that the embodiments of the disclosure described here can be implemented in a sequence other than sequences graphically shown or described here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

According to an embodiment of the disclosure, an embodiment of a method for controlling air supply of fuel cell is provided. It is to be noted that the steps shown in the flowchart of the drawings may be executed in a computer system including, for example, a set of computer-executable instructions. Moreover, although a logic sequence is shown in the flowchart, the shown or described steps may be executed in a sequence different from the sequence here under certain conditions.

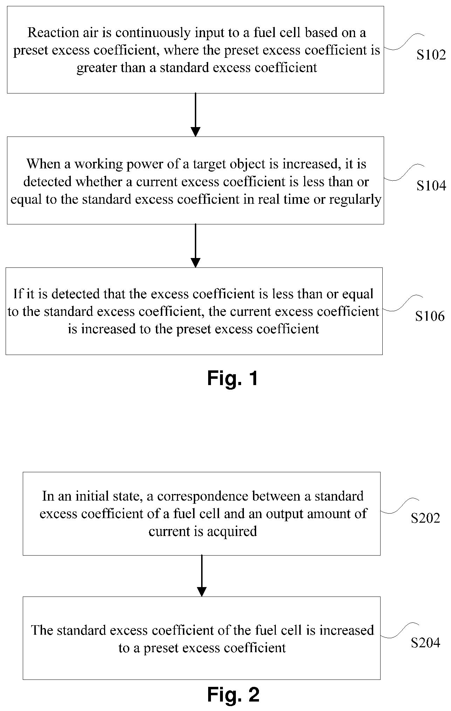

Fig. 1 is a flowchart of a method for controlling air supply of fuel cell according to an embodiment of the disclosure. As shown in Fig. 1, the method includes the following steps:
At step S102, reaction air is continuously input to a fuel cell based on a preset excess coefficient, where the preset excess coefficient is greater than a standard excess coefficient.

In the above step, the excess coefficient may be a ratio of an actual intake amount of the reaction gas to a theoretical intake amount; the reaction gas may be a mixed gas of fuel gas and oxygen, or a mixed gas of fuel gas and air; the standard excess coefficient is a ratio of a theoretical intake amount to an actual intake amount, which is calculated according to the power supply power needing to be provided by the fuel cell when the normal electricity consumption can be satisfied; and the preset excess coefficient may be a value greater than the standard excess coefficient, and the reaction gas is continuously input to the fuel cell according to the preset excess coefficient.

In an optional embodiment, the reaction gas may be a mixed gas of hydrogen and air.

At step S104, when a working power of a target object is increased, it is detected whether a current excess coefficient is less than or equal to the standard excess coefficient in real time or regularly.

In the above steps, the target object may be electrical equipment powered by the fuel cell, which, for example, may be an air conditioner, a light or a television, etc; When the working power of the target object (electrical equipment) is increased, a theoretical intake amount needing to be provided by the fuel cell is calculated according to the current working power of the electrical equipment, a current excess coefficient can be calculated according to the theoretical intake amount currently provided by the fuel cell, and it can be determined whether the current excess coefficient is less than or equal to the standard excess coefficient in real time or regularly.

In an optional embodiment, for example, the reaction gas may be a mixed gas of hydrogen and air, where the standard excess coefficient of the hydrogen may be 1.5, and the standard excess coefficient of the air may be 2.0.

Optionally, the target object may be an air conditioner.

At step S106, if it is detected that the excess coefficient is less than or equal to the standard excess coefficient, the current excess coefficient is increased to the preset excess coefficient.

In the above steps, if it is detected in real time or regularly that the current excess coefficient is less than or equal to the standard excess coefficient, it indicates that the power of the electric appliance is increased, the current input amount of the reaction gas is insufficient, and therefore, the current excess coefficient of the reaction gas may be increased to the preset excess coefficient, where the preset excess coefficient is greater than the standard excess coefficient.

In an optional embodiment, for example, the reaction gas may be a mixed gas of hydrogen and air. If the standard excess coefficient of the hydrogen is 1.5 and the standard excess coefficient of the air is 2.0, the preset excess coefficient of the hydrogen may be set to 1.8, and the preset excess coefficient of the air may be set to 2.4.

It can be seen from the above that in the above embodiments of the present application, by means of the manner that the flow rate of air input to a fuel cell is greater than an actual demand value, reaction gas is input to the fuel cell by using a preset excess coefficient which is greater than a standard excess coefficient, and a current excess coefficient of the reaction gas is detected in real time or regularly and compared with the standard excess coefficient, the current excess coefficient of the reaction gas is adjusted to be always greater than the standard excess coefficient. The purpose of providing needed power at a high reaction speed by the fuel cell when the electricity consumption demand is increased is achieved, so that the technical effect of increasing the response speed of the fuel cell is realized

As an optional implementation manner, as shown in Fig. 2, before reaction air is continuously input to a fuel cell based on a preset excess coefficient, the method further includes the following steps:
At step S202, in an initial state, a correspondence between the standard excess coefficient of the fuel cell and an output amount of current is acquired.

At step S204, the standard excess coefficient of the fuel cell is increased to the preset excess coefficient.

In the above steps, the output amount of the current may be a value of current that allows the fuel cell to output. In the initial state, before the reaction gas is input to the fuel cell, the standard excess coefficient of the fuel cell may be increased to the preset excess coefficient according to the acquired correspondence between the standard excess coefficient of the fuel cell and the output amount of the current, and then the reaction gas is input to the fuel cell according to the preset excess coefficient.

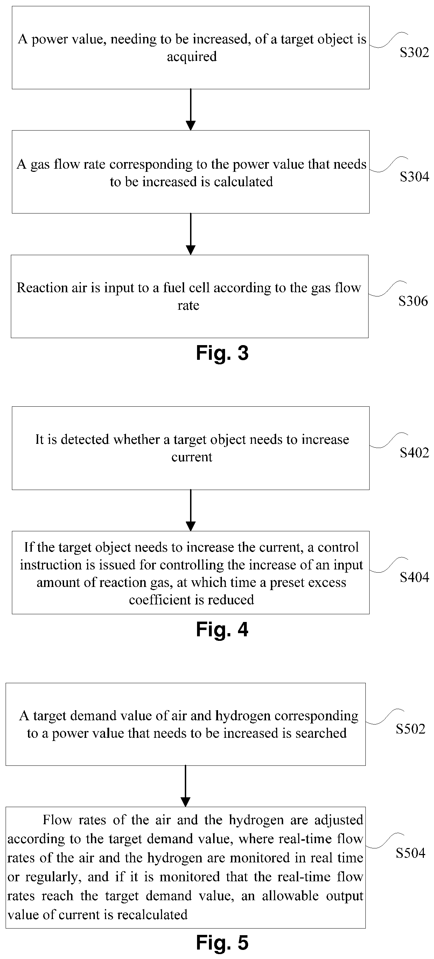

As an optional implementation manner, as shown in Fig. 3, after the standard excess coefficient of the fuel cell is increased to the preset excess coefficient, the method further includes the following steps:
At step S302, a power value, needing to be increased, of the target object is acquired.

At step S304, a gas flow rate corresponding to the power value that needs to be increased is calculated.

At step S306, reaction air is input to the fuel cell according to the gas flow rate.

In the above steps, the target object may be electrical equipment powered by the fuel cell, which, for example, may be an air conditioner, a light or a television, etc; . When the power of the target object (electrical equipment) is increased, an increased power value of the working power of the target object is acquired, a reaction gas flow rate, needing to be increased, of the fuel cell is calculated according to the power value, needing to be increased, of the target object, and then reaction gas is input to the fuel cell according to the reaction gas flow rate that needs to be increased.

As an optional implementation manner, as shown in Fig. 4, before a power value, needing to be increased, of the target object is acquired, the method further includes the following steps:
At step S402, it is detected whether the target object needs to increase current.

At step S404, if the target object needs to increase the current, a control instruction is issued for controlling the increase of an input amount of the reaction gas, at which time the preset excess coefficient is reduced.

In the above steps, the control instruction is an instruction of the fuel cell for controlling the flow rate of the input reaction gas. Before a power value, needing to be increased, of the target object is acquired, it is detected in real time or regularly that the target object needs to increase a power supply current, if the power supply current needs to be increased, an instruction for controlling the increase of an input amount of the reaction gas of the fuel cell is issued, and the fuel cell increases the input amount of the reaction gas according to the instruction, at which time the excess coefficient is reduced.

As an optional implementation manner, the reaction gas at least includes: air and hydrogen, where the step of calculating a gas flow rate corresponding to the power value that needs to be increased may include, as shown in Fig. 5, the following steps:
At step S502, a target demand value of the air and the hydrogen corresponding to the power value that needs to be increased is searched.

At step S504, flow rates of the air and the hydrogen are adjusted according to the target demand value, where real-time flow rates of the air and the hydrogen are monitored in real time or regularly, and if it is monitored that the real-time flow rates reach the target demand value, an allowable output value of current is recalculated.

In the above steps, when the gas flow rate corresponding to the power value, needing to be increased, of the electrical appliance is calculated, a target demand value of the air and the hydrogen corresponding to the power value that needs to be increased is first searched, flow rates of the air and the hydrogen input to the fuel cell are adjusted according to the target demand value of the air and the hydrogen, after the flow rates of the air and the hydrogen input to the fuel cell are adjusted, real-time flow rates of the air and the hydrogen are monitored in real time or regularly, and if it is monitored that the real-time flow rates reach the target demand value, an allowable output value of current of the fuel cell is recalculated.

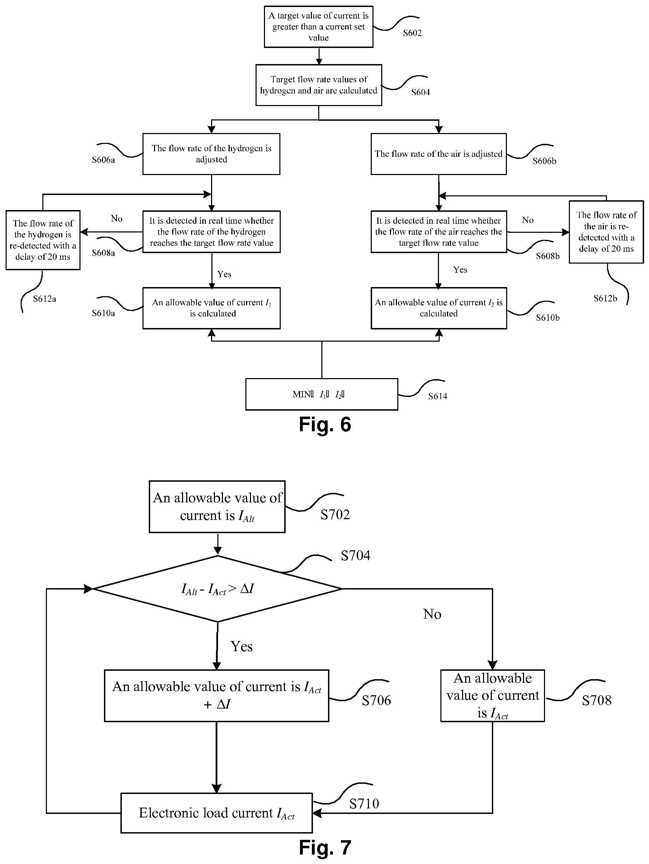

In a preferred embodiment, the above embodiment will be described with reference to Fig. 6 taking air and hydrogen as the reaction gas. Fig. 6 is a flowchart of a preferred method for adjusting flow rates of air and hydrogen according to a target flow rate, which specifically includes the following steps:
At step S602, a target value of current is greater than a current set value.

In the above step, the target value of current may be a value of current of a target object working currently, that is, a value of current of a fuel cell needing to be supplied to the target object; it is determined whether a target value of current required by the fuel cell is greater than a currently set value of current; and if it is greater than the currently set value of current, it indicates that a power supply current of the fuel cell is increased, and a flow rate of reaction gas input to the fuel cell needs to be controlled to be increased according to the increased power supply current of the fuel cell.

At step S604, target flow rate values of hydrogen and air are calculated.

In the above step, target flow rate values of hydrogen and air in the reaction gas, that is, gas flow rates corresponding to a power value needing to be increased, may be calculated according to the target value of current.

At step S606a, the flow rate of the hydrogen is adjusted.

In the above step, after the target flow rate value of the hydrogen in the reaction gas is calculated, the flow rate of the hydrogen is adjusted according to the target flow rate value of the hydrogen.

At step S606b, the flow rate of the air is adjusted.

In the above step, after the target flow rate value of the air in the reaction gas is calculated, the flow rate of the air is adjusted according to the target flow rate value of the air.

At step S608a, it is detected in real time whether the flow rate of the hydrogen reaches the target flow rate value.

In the above step, after the flow rate of the hydrogen is adjusted, it is detected in real time whether the flow rate of the hydrogen reaches the target flow rate value.

In step S608a, if the detection result is yes, step S610a is performed, and if the detection result is no, step S612a is performed.

At step S608b, it is detected in real time whether the flow rate of the air reaches the target flow rate value.

In the above step, after the flow rate of the air is adjusted, it is detected in real time whether the flow rate of the air reaches the target flow rate value.

In step S608b, if the detection result is yes, step S610b is performed, and if the detection result is no, step S612b is performed.

At step S610a, an allowable value of current *I*₁ is calculated.

In the above step, if it is monitored that a real-time flow rate of the hydrogen reaches the target flow rate value (target demand value), an allowable output value of current *I*₁ is recalculated according to the real-time flow rate of the hydrogen.

At step S610b, an allowable value of current *I*₂ is calculated.

In the above step, if it is monitored that a real-time flow rate of the air reaches the target flow rate value (target demand value), an allowable output value of current *I*₂ is recalculated according to the real-time flow rate of the air.

At step S612a, the flow rate of the hydrogen is re-detected with a delay of 20 ms.

In the above step, if it is monitored that the real-time flow rate of the hydrogen does not reach the target flow rate value (target demand value), the flow rate of the hydrogen is re-detected after 20 ms, that is, the process returns to step S608a.

At step S612b, the flow rate of the air is re-detected with a delay of 20 ms.

In the above step, if it is monitored that the real-time flow rate of the air does not reach the target flow rate value (target demand value), the flow rate of the air is re-detected after 20 ms, that is, the process returns to step S608b.

At step S614, MIN(*I*₁, *I*₂).

Finally, a minimum value MIN(*I*₁, *I*₂) in the allowable output value of current *I*₁, which is calculated according to the real-time flow rate of the hydrogen and the allowable output value of current *I*₂, which is calculated according to the real-time flow rate of the air is used as an allowable output value of current of the fuel cell.

Based on the above embodiment, after obtaining the allowable output value of current of the fuel cell, further, it can be verified by the flowchart shown in Fig. 7 that the value of current provided by the fuel cell in the above embodiment may satisfy the working current of an electronic load (electrical equipment). As shown in Fig. 7, the allowable value of current of the fuel cell is represented by *I_{Alt},* the current of the electronic load (electrical equipment) is represented by *I_{Act},* and the method specifically includes the following steps:
At step S702, an allowable value of current is *I_{Alt}.*

In the above step, an allowable output value of current *I_{Alt}* of the fuel cell may be obtained from the allowable output value of current *I*₁, which is calculated according to the real-time flow rate of the hydrogen and the allowable output value of current *I*₂, which is calculated according to the real-time flow rate of the air.

At step S704, *I_{Alt}-I_{Act}* > Δ*I*.

In the above steps, the allowable value of current of the fuel cell is obtained according to whether the difference between the allowable output value of current *I_{Alt}* of the fuel cell and the electronic load current *I_{Act}* is greater than a preset current difference Δ*I*.

At step S706, an allowable value of current is *I_{Act}* + Δ*I*.

In the above steps, if the difference between the allowable output value of current *I_{Alt}* of the fuel cell and the electronic load current *I_{Act}* is greater than the preset current difference ΔI, the allowable value of current of the fuel cell is *I_{Act}* + Δ*I*.

At step S708, an allowable value of current is *I_{Act}.*

In the above steps, if the difference between the allowable output value of current *I_{Alt}* of the fuel cell and the electronic load current *I_{Act}* is less than or equal to the preset current difference ΔI, the allowable value of current of the fuel cell is *I_{Act}.*

At step S710, an electronic load current is *I_{Act}.*

Finally, it can be seen from the electronic load current *I_{Act}* that the output current *I_{Act}* + Δ*I* or *I_{Act}* that can be provided by the fuel cell may satisfy the working current of the electronic load.

After step S710 is performed, the process returns to step S704.

Therefore, in the above embodiment of the disclosure, by setting an airflow supply value of the fuel cell to be greater than the actual demand value, the allowable output current of the fuel cell may meet the demand of the electrical appliance in time when the working current of the target object (electrical appliance) is suddenly increased, thereby increasing the response speed of the fuel cell.

### Embodiment 2

According to the embodiment of the disclosure, an embodiment of a device for controlling air supply of fuel cell is also provided. The method for controlling air supply of fuel cell in the embodiment 1 of the disclosure may be performed in the device of the embodiment 2 of the disclosure.

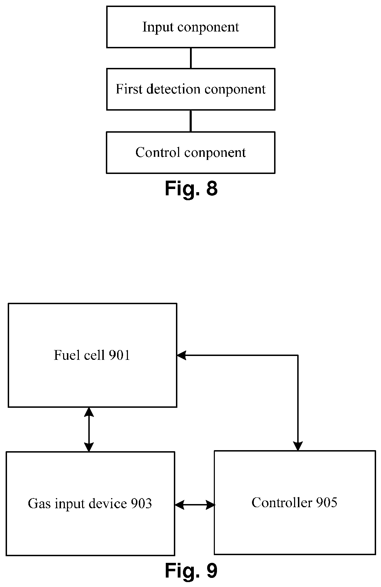

Fig. 8 is a schematic diagram of a device for controlling air supply of fuel cell according to an embodiment of the disclosure. As shown in Fig. 8, the device includes an input component 801, a first detection component 803 and a control component 805.

The input component 801 is configured to continuously input reaction air to a fuel cell based on a preset excess coefficient, where the preset excess coefficient is greater than a standard excess coefficient; the first detection component 803 is configured to detect, when a working power of a target object is increased, whether a current excess coefficient is less than or equal to the standard excess coefficient in real time or regularly; and the control component 805 is configured to increase, if it is detected that the excess coefficient is less than or equal to the standard excess coefficient, the current excess coefficient to the preset excess coefficient.

It can be seen from the above that in the above embodiments of the present application, by means of the manner that the flow rate of air input to a fuel cell is greater than an actual demand value, reaction gas is input to the fuel cell by using a preset excess coefficient which is greater than a standard excess coefficient, and a current excess coefficient of the reaction gas is detected in real time or regularly and compared with the standard excess coefficient, the current excess coefficient of the reaction gas is adjusted to be always greater than the standard excess coefficient. The purpose of providing needed power at a high reaction speed by the fuel cell when the electricity consumption demand is increased is achieved.

In an optional embodiment, the device further includes: a first acquisition component, configured to acquire, in an initial state, a correspondence between the standard excess coefficient of the fuel cell and an output amount of current; and an increase component, configured to increase the standard excess coefficient of the fuel cell to the preset excess coefficient.

In an optional embodiment, the device further includes: a second acquisition component, configured to acquire a power value, needing to be increased, of the target object; and a calculation component, configured to calculate a gas flow rate corresponding to the power value that needs to be increased, where the input component is further configured to input reaction air to the fuel cell according to the gas flow rate.

In an optional embodiment, the device further includes: a second detection component, configured to detect whether the target object needs to increase current; and a sending component, configured to issue, if the target object needs to increase the current, a control instruction for controlling the increase of an input amount of the reaction gas, at which time the preset excess coefficient is reduced.

In an optional embodiment, the reaction gas at least includes: air and hydrogen, where the calculation component includes: a query component, configured to search for a target demand value of the air and the hydrogen corresponding to the power value that needs to be increased; and an adjusting component, configured to adjust flow rates of the air and the hydrogen according to the target demand value, where if it is monitored in real time or regularly that real-time flow rates of the air and the hydrogen reach the target demand value, an allowable output value of current is recalculated.

### Embodiment 3

According to the embodiment of the disclosure, an embodiment of a system for controlling air supply of fuel cell is also provided. The method for controlling air supply of fuel cell in the embodiment 1 of the disclosure may be performed in the system of the embodiment 3 of the disclosure.

Fig. 9 is a schematic diagram of a system for controlling air supply of fuel cell according to an embodiment of the disclosure. As shown in Fig. 9, the system includes a fuel cell 901, a gas input device 903 and a controller 905.

The fuel cell 901 is configured to supply, after a railway vehicle is powered on, power to an auxiliary system of the railway vehicle; the gas input device 903 is connected to the fuel cell 901, and configured to continuously input reaction air to a fuel cell based on a preset excess coefficient, where the preset excess coefficient is greater than a standard excess coefficient; and the controller 905 is connected to the gas input device 903, and configured to increase, if it is detected that the excess coefficient is less than or equal to the standard excess coefficient when a working power of a target object is increased, a current excess coefficient to the preset excess coefficient.

Optionally, the controller 905 may also be connected to the fuel cell 901.

It can be seen from the above that in the above embodiments of the present application, by means of the manner that the flow rate of air input to a fuel cell is greater than an actual demand value, reaction gas is input to the fuel cell by using a preset excess coefficient which is greater than a standard excess coefficient, and a current excess coefficient of the reaction gas is detected in real time or regularly and compared with the standard excess coefficient, the current excess coefficient of the reaction gas is adjusted to be always greater than the standard excess coefficient. The purpose of providing needed power at a high reaction speed by the fuel cell when the electricity consumption demand is increased is achieved.

In an optional embodiment, the controller 905 is further configured to acquire, in an initial state, a correspondence between the standard excess coefficient of the fuel cell and an output amount of current, and increase the standard excess coefficient of the fuel cell to the preset excess coefficient.

In an optional embodiment, the controller 905 is further configured to acquire a power value, needing to be increased, of the target object, calculate a gas flow rate corresponding to the power value that needs to be increased, and input reaction air to the fuel cell according to the gas flow rate.

In an optional embodiment, the controller 905 is further configured to detect whether the target object needs to increase current, and issue, if the target object needs to increase the current, a control instruction for controlling the increase of an input amount of the reaction gas, at which time the preset excess coefficient is reduced.

In an optional embodiment, the reaction gas at least includes: air and hydrogen; and the controller 905 is further configured to search for a target demand value of the air and the hydrogen corresponding to the power value that needs to be increased, and adjust flow rates of the air and the hydrogen according to the target demand value, where real-time flow rates of the air and the hydrogen are monitored in real time or regularly, and if it is monitored that the real-time flow rates reach the target demand value, an allowable output value of current is recalculated.

According to the embodiments of the disclosure, an embodiment of a railway vehicle is also provided, which includes an optional or preferred system for controlling air supply of fuel cell in any of the above.

The above serial numbers of the embodiments of the disclosure are merely for the description, and do not represent the advantages and disadvantages of the embodiments.

In the above embodiments of the disclosure, descriptions of each embodiment are emphasized respectively, and parts which are not elaborated in detail in a certain embodiment may refer to relevant descriptions of other embodiments.

In several embodiments provided by the present application, it is to be understood that the disclosed technical content may be implemented in other manners. The device embodiments described above are merely illustrative. For example, the division of the unit may be a logical function division. In actual implementation, there may be another division manner, for example, multiple units or components may be combined or integrated into another system, or some features may be ignored or not executed. In addition, the coupling or direct coupling or communication connection shown or discussed may be an indirect coupling or communication connection through some interfaces, units or components, and may be electrical or otherwise.

The units described as separate components may or may not be physically separated, and the members displayed as units may or may not be physical units, that is, may be located in one place, or may be distributed to multiple units. Some or all of the units may be selected according to actual needs to achieve the purpose of the solution of the present embodiment.

In addition, each functional unit in each embodiment of the disclosure may be integrated into a processing unit, each unit may also physically exist independently, and two or more than two units may also be integrated into a unit. The integrated unit may be implemented in a hardware form and may also be implemented in form of software functional unit.

The integrated unit may be stored in a computer-readable storage medium if being implemented in the form of a software functional unit and sold or used as a standalone product. Based on such understanding, the technical solution of the disclosure, which is essential or contributes to the conventional art, may be embodied in the form of a software product stored in a storage medium (such as a ROM/RAM, a magnetic disk and an optical disc), including a number of instructions for causing a terminal device (which may be a mobile phone, a computer, a server, or a network device, etc.) to perform the methods described in various embodiments of the disclosure. The foregoing storage medium includes: a U disk, a ROM, a RAM, a mobile hard disk, a magnetic disk, or an optical disk, and the like, which may store a program code.

The above is only a preferred implementation manner of the disclosure. It is to be noted that a number of modifications and refinements may be made by those of ordinary skill in the art without departing from the principles of the disclosure, and such modifications and refinements are also considered to be within the scope of protection of the disclosure.

## Claims

1. A method for controlling air supply of fuel cell, comprising:
continuously inputting reaction air to a fuel cell based on a preset excess coefficient, wherein the preset excess coefficient is greater than a standard excess coefficient;
in a case that a working power of a target object is increased, detecting, in real time or regularly, whether a current excess coefficient is less than or equal to the standard excess coefficient; and
if it is detected that the excess coefficient is less than or equal to the standard excess coefficient, increasing the current excess coefficient to the preset excess coefficient.

2. The method according to claim 1, wherein before continuously inputting reaction air to a fuel cell based on a preset excess coefficient, the method further comprises:
acquiring, in an initial state, a corresponding relationship between the standard excess coefficient of the fuel cell and an output amount of current; and
increasing the standard excess coefficient of the fuel cell to the preset excess coefficient.

3. The method according to claim 1 or 2, wherein after increasing the current excess coefficient to the preset excess coefficient, the method further comprises:
acquiring a power value, needing to be increased, of the target object;
calculating a gas flow rate corresponding to the power value that needs to be increased; and
inputting reaction air to the fuel cell according to the gas flow rate.

4. The method according to claim 3, wherein before acquiring a power value, needing to be increased, of the target object, the method further comprises:
detecting whether the target object needs to increase current; and
if the target object needs to increase the current, issuing a control instruction for controlling an input amount of the reaction gas to be increased at which time the preset excess coefficient is reduced.

5. The method according to claim 3, wherein the reaction gas at least comprises:
air and hydrogen, wherein calculating a gas flow rate corresponding to the power value that needs to be increased comprises:
searching for a target demand value of the air and the hydrogen corresponding to the power value that needs to be increased; and
adjusting flow rates of the air and the hydrogen according to the target demand value;
wherein flow rates of the air and the hydrogen are monitored in real time or regularly, and if it is monitored that the flow rates reach the target demand value, an allowable output value of current is recalculated.

6. A device for controlling air supply of fuel cell, comprising:
an input component, configured to continuously input reaction air to a fuel cell based on a preset excess coefficient, wherein the preset excess coefficient is greater than a standard excess coefficient;
a first detection component, configured to detect, in a case that a working power of a target object is increased, whether a current excess coefficient is less than or equal to the standard excess coefficient in real time or regularly; and
a control component, configured to increase, if it is detected that the excess coefficient is less than or equal to the standard excess coefficient, the current excess coefficient to the preset excess coefficient.

7. The device according to claim 6, the device for controlling air supply of fuel cell further comprising:
a first acquisition component, configured to acquire, in an initial state, a corresponding relationship between the standard excess coefficient of the fuel cell and an output amount of current; and
an increase component, configured to increase the standard excess coefficient of the fuel cell to the preset excess coefficient.

8. The device according to claim 6 or 7, the device for controlling air supply of fuel cell further comprising:
a second acquisition component, configured to acquire a power value, needing to be increased, of the target object; and
a calculation component, configured to calculate a gas flow rate corresponding to the power value that needs to be increased,
wherein the input component is further configured to input reaction air to the fuel cell according to the gas flow rate.

9. The device according to claim 8, the device for controlling air supply of fuel cell further comprising:
a second detection component, configured to detect whether the target object needs to increase current; and
a sending component, configured to issue, if the target object needs to increase the current, a control instruction for controlling the increase of an input amount of the reaction gas, at which time the preset excess coefficient is reduced.

10. The device according to claim 8, wherein the reaction gas at least comprises:
air and hydrogen, wherein the calculation component comprises:
a query component, configured to search for a target demand value of the air and the hydrogen corresponding to the power value that needs to be increased; and
an adjusting component, configured to adjust flow rates of the air and the hydrogen according to the target demand value,
wherein if it is monitored in real time or regularly that flow rates of the air and the hydrogen reach the target demand value, an allowable output value of current is recalculated.

11. A system for controlling air supply of fuel cell, comprising:
a fuel cell, configured to supply, after a railway vehicle is powered on, power to an auxiliary system of the railway vehicle;
a gas input device, connected to the fuel cell, and configured to continuously input reaction air to a fuel cell based on a preset excess coefficient, wherein the preset excess coefficient is greater than a standard excess coefficient; and
a controller, connected to the gas input device, and configured to increase, if it is detected that the excess coefficient is less than or equal to the standard excess coefficient in a case that a working power of a target object is increased, a current excess coefficient to the preset excess coefficient.

12. The system according to claim 8 , wherein the controller configured to acquire, in an initial state, a corresponding relationship between the standard excess coefficient of the fuel cell and an output amount of current; and increase the standard excess coefficient of the fuel cell to the preset excess coefficient before continuously inputting reaction air to a fuel cell based on a preset excess coefficient.

13. The system according to claim 8 , wherein the controller configured to acquire a power value, needing to be increased, of the target object; calculate a gas flow rate corresponding to the power value that needs to be increased; and input reaction air to the fuel cell according to the gas flow rate , after increasing the current excess coefficient to the preset excess coefficient.

14. The system according to claim 8 , wherein the controller configured to detect whether the target object needs to increase current; and if the target object needs to increase the current, issue a control instruction for controlling an input amount of the reaction gas to be increased at which time the preset excess coefficient is reduced , before acquiring a power value, needing to be increased, of the target object.

15. A railway vehicle, comprising the system for controlling air supply of fuel cell according to claim 11-14.
